# EUROPEAN PATENT SPECIFICATION

(11) **EP 3 573 377 B1**
(45) Date of publication and mention of the grant of the patent: **18.11.2020**
(21) Application number: 19165637.0
(22) Date of filing: 27.03.2019
(51) Int. Cl.: H04W 52/02, H04W 76/45, H04W 76/27

(54) **A SYSTEM AND METHOD FOR SHORT RESPONSE TIME DATA SERVICES THROUGH CELLULAR NETWORKS**
SYSTEM UND VERFAHREN FÜR DATENDIENSTE MIT KURZER ANTWORTZEIT ÜBER ZELLULARE NETZWERKE
SYSTÈME ET PROCÉDÉ POUR DES SERVICES DE DONNÉES À TEMPS DE RÉACTION COURT À TRAVERS DES RÉSEAUX CELLULAIRES

(30) Priority: 21.05.2018 IL 25950418
(43) Date of publication of application: 27.11.2019
(73) Proprietor: Elbit Systems Land and C4I Ltd., 4250705 Natanya (IL)
(72) Inventor: YIZHAK, Eli Ben, 4250705 Netanya (IL); GOLAN, Yossef, 4250705 Netanya (IL); KALMAN, Osher, 4250705 Netanya (IL)
(74) Representative: Studio Torta S.p.A.

(56) References cited:
- US-A1- 2011 194 433
- US-A1- 2013 258 883
- US-A1- 2015 172 874

## Description

### TECHNICAL FIELD

The invention relates to a system and method for short response time data services through cellular networks.

### BACKGROUND

Data services over cellular networks have become a common way to provide services to users using various User Equipment (UE) (e.g. a hand-held telephone, a laptop computer, a tablet, a smart phone, a smartwatch, an Internet of Things device, etc.) that are connected through a modem to the cellular networks. Mobile Network Operators (MNO) provide data service over cellular to users. For MNO to uphold a proper level of the data services (setup time, latency, etc.), special consideration should be taken to the way the data services utilize the cellular network resources.

Some of the data services require a short response time in order for the service to operate in a manner that will not result in a poor user experience. Push to Talk over Cellular (PoC) service is an example of a data service that requires such short response time. PoC is a data service that enables users to use their UE over cellular networks as walkie-talkies, enabling a single user to establish a PoC session, to another user or a group of users, with a single press of a button. A typical push-to-talk connection should establish the PoC session almost instantly.

The current implementations for Universal Mobile Telecommunications System (UMTS) cellular networks (i.e. 3G and 3.5G cellular networks) utilize the cellular network in a "Circuit Switching" fashion in order to maintain the short response time required by applications on the UE that consume these data services. By this method, a dedicated physical channel is continuously allocated for each UE participating in the data service. This method requires costly network resources to be held up even when no data traffic is applied and results in UE high energy consumption, due to the modem's continuous usage, therefore reducing UE's battery time. Current PoC implementations, using UMTS cellular networks, involves long setup time constants when activating the cellular modem from an Idle state to a dedicated channel state, allowing the UE to receive and transmit data through the cellular network. These time constants may take some few seconds providing a poor user experience, comparing to a legacy walkie-talkie.

There is a need to provide an efficient system and method for short response time data services, while keeping an efficient use of cellular network resources - in a manner that will not result in a poor user experience. There is thus a need in the art for a new method and system for short response time data services through cellular networks.

References considered to be relevant as background to the presently disclosed subject matter are listed below. Acknowledgement of the references herein is not to be inferred as meaning that these are in any way relevant to the patentability of the presently disclosed subject matter.

Latency in HSPA Data Networks (Mohan, Siddharth, Rohit Kapoor, and Bibhu Mohanty. Latency in HSPA data networks. White paper of Qualcomm (2011)), discloses that latency and throughput are two critical performance metrics of a communication network. Recently, a lot of attention has been focused on improving throughput (or spectral efficiency) of Wireless Wide Area Networks (WWANs) through the use of physical and MAC layer techniques, such as higher order modulation, MIMO and aggregation of bandwidth (multi-carrier). While some data applications directly benefit from the higher data rates, for many applications high data rates do not translate to improved user experience unless the latency is low. In this paper, we examine the Control plane (C-plane) and User plane (U-plane) latencies in an HSPA data system. We show that significant C-plane latency reduction can be achieved in HSPA by carrying signaling on HS-DSCH and E-DCH channels (as opposed to dedicated channels, which is the practice now). We also compare the C-plane and U-Plane latencies of HSPA and LTE, which have comparable spectral efficiency.

US Patent No. 7,925,290 (Rosen et al.) published on April 12, 2011, discloses a system and method for providing high performance dispatch services for a push-to-talk (PTT) communication over a wireless communication network. When a wireless device is powered up, it registers with a server and then transitions to a paging state instead of an idle state. When the wireless device is ready to transmit PTT communications, it sends a message to the server and transitions to a transmission state when a confirmation is received from the server. Once in the transmission state, the wireless device is ready to transmit the PTT communications to the server.

US Patent No. 8,848,553 (Song et al.) published on September 30, 2014, discloses an embodiment of a user equipment (UE) determines to initiate a communication session with at least one other UE to be arbitrated by an application server. The UE determines a type of the communication session (e.g., delay-sensitive, PTT, etc.) and/or a size of a call message to be sent by the UE for requesting initiation of the communication session by the application server. The UE selects a reverse-link channel on which to transmit the call message based at least in part upon the determined type of the communication session and/or the determined size of the call message. The UE transitions to a given state (e.g., CELL_FACH, CELL_DCH, etc.) that supports transmissions upon the selected reverse-link channel. The UE transmits the call message on the selected reverse-link channel after the UE is transitioned to the given state.

US Patent Application No. 2005/0141541 (Cuny et al.) published on June 30, 2005, discloses a real-time media session is established between user equipment and a media communication server via a serving access network. According to the Invention, dummy data (e.g. a dummy message) is sent in order to maintain a dedicated channel during the inactive periods of a real-time media session or to trigger an early setup of a dedicated channel in the access network. In this manner, user equipment logged on to a real-time media (e.g. PoC) session are prevented from going to a radio resource idle state, thus avoiding potential long extra delays during real-time media (e.g. PoC) service usage. The invention further allows the sending and receiving user equipment to set up dedicated channels (DCH) already during the start-to-talk procedure of the transmitting user equipment, which in turn potentially reduces end-to-end delays during the conversation.

US Patent No. 9,838,964 (Singhai et al.) published on December 5, 2017, discloses a user equipment, an RNC, or an application operable in a wireless communications network and methods in which the user equipment can be transitioned into a dormant state controlled by an application driven scheme. According to the application driven scheme, a request is received from an active process at an application server to trigger a wireless device to enter a dormant state, and network traffic information corresponding to a time interval is received from a wireless device. If the network traffic information indicates that the active process is solely responsible for network traffic at a transport layer of the wireless device during the time interval, one or more commands are transmitted to the wireless device such that the wireless device enters the dormant state. Other aspects, embodiments, and features are also claimed and described.

US Patent No. 9,008,023 (Khay-Ibbat) published on April 14, 2015, discloses a user equipment (UE) determines to initiate a communication session with at least one other UE to be arbitrated by an application server. The UE determines a type of the communication session (e.g., delay-sensitive, PTT, etc.) and/or a size of a call message to be sent by the UE for requesting initiation of the communication session by the application server. The UE selects a reverse-link channel on which to transmit the call message based at least in part upon the determined type of the communication session and/or the determined size of the call message. The UE transitions to a given state (e.g., CELL_FACH, CELL_DCH, etc.) that supports transmissions upon the selected reverse-link channel. The UE transmits the call message on the selected reverse-link channel after the UE is transitioned to the given state.

US Patent No. 9,467,917 (Farnsworth et al.) published on October 11, 2016, discloses a method at a user equipment for establishing a circuit switched call, the user equipment being in a Cell Forward Access CHannel (CELL_FACH) state, a Cell Paging CHannel (CELL_PCH) state or a UTRAN Registration Area Paging CHannel (URA_PCH) state, the method receiving an indication that a circuit switched call is pending; sending to a network element a message to facilitate the user equipment to transition to a Cell Dedicated CHannel (CELL_DCH) state, the message being one of a cell update message having a traffic volume indicator information element indicating that pending uplink data exceeds a threshold or an RRCConnectionRequest message; and establishing the circuit switched call.

US Patent No. 8,265,039 (Reza et al.) published on September 11, 2012, discloses a method and apparatus for facilitating handoff operations in a wireless communication device is provided. The method may comprise receiving, by a wireless communication device, a plurality of pilot signals, wherein the plurality of pilot signals includes an active pilot signal and one or more candidate pilot signals, selecting at least one nominal active pilot signal strength value for comparison with the active pilot signal, classifying the one or more candidate pilot signals into a respective one of a plurality of tiers based on a handoff factor corresponding to the at least one candidate pilot signal, wherein the plurality of tiers are divided according to one or more handoff factors, and selecting at least one threshold handoff value for each of the plurality of tiers, wherein the at least one threshold handoff value partly depends on one of the at least one nominal active pilot signal strength values.

US Patent No. 8,849,961 (Hartikainen et al.) published on September 30, 2014, discloses a system and method of maintaining an always-on application client communication is provided. An application programming interface implemented on a device hosting an always-on application client determines if network-based keep-alive functionality exists in a network where the device operates. If network-based keep-alive functionality exists, a network element is instructed to transmit keep-alive messages to the application server on behalf of the device. The network element can be implemented in or as a variety of existing network elements, e.g., as a GPRS gateway serving node or a standalone keep-alive network element. Alternatively, an application server communicatively connected to the always-on application client may query whether network-based keep-alive functionality exists. If network-based keep-alive functionality exists, the application server negotiates with the always-on application client to determine an application-specific mechanism for implementing the network-based keep-alive functionality. When an application server queries for network-based keep-alive functionality, an application programming interface need not be utilized.

US Patent No. 9,451,383 (Bulut et al.) published on September 20, 2016, discloses an approach for establishing one or more communication sessions in a cloud computing environment and maintaining the establishment of the one or more communication sessions while managing system resource and power resource consumption. The approach involves causing, at least in part, an establishment of one or more communication sessions between at least one device and one or more other devices, wherein the communication sessions convey, at least in part, one or more notification messages. The approach also involves processing and/or facilitating a processing of device resource information, device capability information, network resource information, or a combination thereof to determine one or more parameters for generating one or more heartbeat signals to maintain the one or more communication sessions.

US Patent Application No. 2011/1094433 A1 (Song et al.) published on August 11, 2011, discloses an embodiment in which a user equipment (UE) is in a communication session with at least one other UE, wherein the traffic between a UE in a dedicated channel state (e.g. CELL_DCH state) and an application server arbitrating said communication session is monitored by an access network. Depending on the monitored traffic, the access network can transition the UE away from the dedicated-channel state. If no traffic is detected within a set time, then the UE can be transitioned to a given state (e.g. CELL_FACH, CELL_PCH or URA_PCH). Alternatively, if traffic is detected within a set time, then the UE can remain in the dedicated-channel state.

### GENERAL DESCRIPTION

In accordance with a first aspect of the presently disclosed subject matter, there is provided a User Equipment (UE) as claimed in claim 1.

In some cases, the modem is further capable of connecting to a Long-Term Evolution (LTE) cellular network and the processing resource is further configured to periodically transitioning the UE to the idle state, thereby enabling the modem to switch from the UMTS cellular network to the LTE cellular network.

In some cases, a first power consumption of the UE in the idle state is lower than a second power consumption of the UE in the intermediate states, and wherein the second power consumption of the UE in the intermediate states is lower than a third power consumption of the UE in the dedicated channel state.

In some cases, the intermediate states are one or more of: URA_PCH state, CELL_PCH state or CELL_FACH state.

In some cases, the processing resource is configured to periodically transmit messages to the UMTS cellular network for the preventing.

In some cases, the processing resource is further configured to transmit and receive data utilizing the modem in order to facilitate a data service.

In some cases, the data service is a Push-To-Talk (PTT) over the UMTS cellular network or over an LTE cellular network.

In some cases, a PTT session over the UMTS cellular network is initiated by the UE in less than one second.

In some cases, the UE is a mobile phone device.

In some cases, the UE further comprises a microphone and a speaker, enabling a user of the UE to conduct a conversation using the UE.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of a data service operating over a cellular network, in accordance with the presently disclosed subject matter;
**Fig. 2** is a block diagram schematically illustrating one example of a system for short response time data services through cellular networks, in accordance with the presently disclosed subject matter;
**Fig. 3** is a block diagram schematically illustrating one example of the states a UE may be present in, in accordance with the presently disclosed subject matter;
**Fig. 4** is a flowchart illustrating one example of a sequence of operations carried out for preventing at least one transition of the UE to an idle state, in accordance with the presently disclosed subject matter;
**Fig. 5** is a flowchart illustrating one example of a sequence of operations carried out for causing the cellular network to update discovery information associated with the UE, in accordance with the presently disclosed subject matter; and
**Fig. 6** is a flowchart illustrating one example of an algorithm carried out at the UE for preventing at least one transition of the UE to an idle state, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "maintaining", "transitioning", "responding", "dedicating", "operating" or the like, include action and/or processes of a computer that manipulate and/or transform data into other data, said data represented as physical quantities, e.g. such as electronic quantities, and/or said data representing the physical objects. The terms "computer", "processor", and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g. digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or nonvolatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

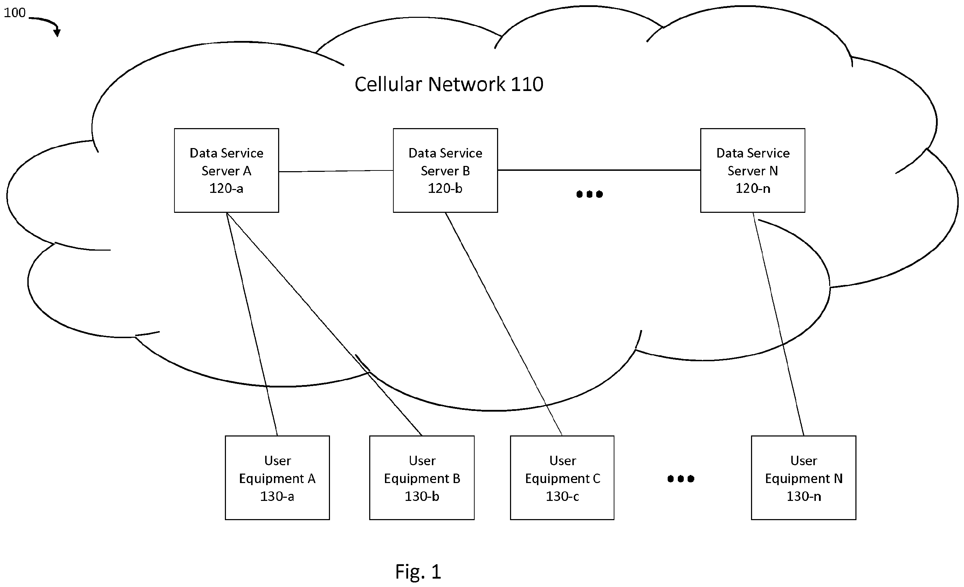

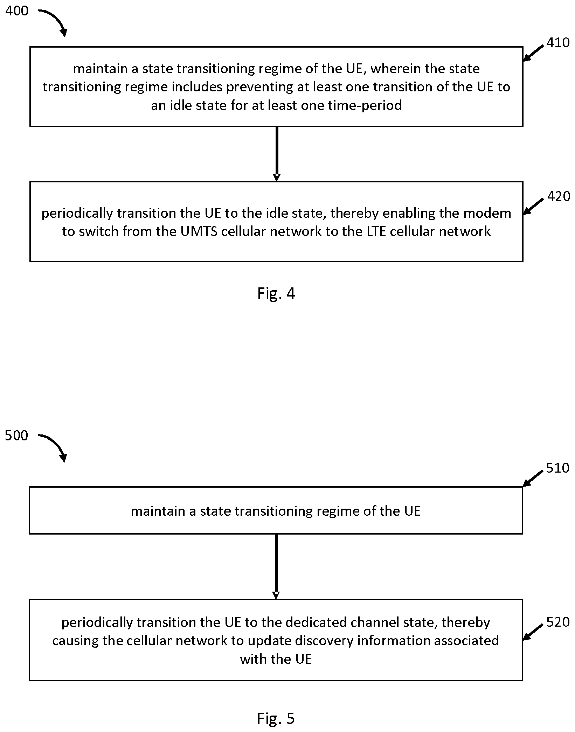

In embodiments of the presently disclosed subject matter, fewer, more and/or different stages than those shown in **Fig. 4-5** may be executed. In embodiments of the presently disclosed subject matter one or more stages illustrated in **Fig. 4-5** may be executed in a different order and/or one or more groups of stages may be executed simultaneously. **Figs. 1-3** illustrate a general schematic of the system architecture in accordance with an embodiment of the presently disclosed subject matter. Each module in **Figs. 1-3** can be made up of any combination of software, hardware and/or firmware that performs the functions as defined and explained herein. The modules in **Figs. 1-3** may be centralized in one location or dispersed over more than one location. In other embodiments of the presently disclosed subject matter, the system may comprise fewer, more, and/or different modules than those shown in **Figs. 1-3****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored in the non-transitory computer readable medium and should be applied mutatis mutandis to method that may be executed by a computer that reads the instructions stored in the non-transitory computer readable medium.

Bearing this in mind, attention is drawn to **Fig. 1****,** a schematic illustration of a data service operating over a cellular network, in accordance with the presently disclosed subject matter.

According to the presently disclosed subject matter, environment 100, includes a cellular network 110. Cellular network 110 is a communication network distributed over land cells. The cellular network 110 may be a UMTS type cellular network, a Long-Term Evolution (LTE) type cellular network, a High Speed Packet Access (HSPA) type cellular network, other types of cellular networks or any combination thereof. Cellular network 110 may comprise a plurality of data service servers (data service server A 120-a, data service server B 120-b, ..., data service server N 120-n).

Environment 100 may further comprise UE (user equipment A 130-a, user equipment B 130-b, user equipment C 130-c, ..., user equipment N 130-n) which are devices (e.g. a hand-held telephone, a laptop computer, a tablet, a smart phone, a smartwatch, etc.) used by users to consume data services over the cellular network 110. The data service servers (data service server A 120-a, data service server B 120-b, ..., data service server N 120-n) utilize the cellular network 110 capabilities to send and receive data to/from the UE (user equipment A 130-a, user equipment B 130-b, user equipment C 130-c, ..., user equipment N 130-n).

The UE (user equipment A 130-a, user equipment B 130-b, user equipment C 130-c, ..., user equipment N 130-n) may connect through the cellular network 110 to the data service servers (data service server A 120-a, data service server B 120-b, ..., data service server N 120-n). The UE (user equipment A 130-a, user equipment B 130-b, user equipment C 130-c, ..., user equipment N 130-n) may send and receive data over the cellular network 110 to and from the data service servers (data service server A 120-a, data service server B 120-b, ..., data service server N 120-n) and the data service servers (data service server A 120-a, data service server B 120-b, ..., data service server N 120-n) can route the data through cellular network 110 to reach a destination UE (e.g. user equipment A 130-a, user equipment B 130-b, user equipment C 130-c, ..., user equipment N 130-n), thus providing a data based service to the users of the UE (user equipment A 130-a, user equipment B 130-b, user equipment C 130-c, ..., user equipment N 130-n).

Some of the data services require short response time from the UE (user equipment A 130-a, user equipment B 130-b, user equipment C 130-c, ..., user equipment N 130-n) in order for the service to operate in a manner that will not result in a poor user experience. PoC service is an example of such a data service that requires short response time. PoC is a data service that enables users to use their UE (e.g. user equipment A 130-a, user equipment B 130-b, user equipment C 130-c, ..., user equipment N 130-n) over cellular network 110 as walkie-talkies, enabling a single user to setup a PoC session and then reach another single UE (user equipment A 130-a, user equipment B 130-b, user equipment C 130-c, ..., user equipment N 130-n) or an active talk group of UE (user equipment A 130-a, user equipment B 130-b, user equipment C 130-c, ..., user equipment N 130-n) with a single button press. A typical push-to-talk connection should connect a UE (e.g. user equipment A 130-a, user equipment B 130-b, user equipment C 130-c, ..., user equipment N 130-n) to the group almost instantly. For example, initiate the PoC session and connect to the call in less than one second. In a PoC data service setup, one or more of the data service servers (data service server A 120-a, data service server B 120-b, ..., data service server N 120-n) operate as a PoC server, providing, among others, centralized PoC session handling, media distribution, policy enforcement for incoming sessions, session relay management and the management of participant information.

It is to be noted that current short response time data services implementations over some of the cellular network 110 types, for example over UMTS type cellular network 110 (i.e. 3G and 3.5G cellular networks), utilize the cellular network 110 in a "Circuit Switching" fashion in order to maintain the short response time required from the UE (e.g. user equipment A 130-a, user equipment B 130-b, user equipment C 130-c, .., user equipment N 130-n) participating in the data service. In this method, a dedicated physical channel is continuously allocated for each UE (e.g. user equipment A 130-a, user equipment B 130-b, user equipment C 130-c, ..., user equipment N 130-n) participating in the data service. This allows for instant discovery and connection, in comparison with the discovery and connection time when not using a dedicated channel, between the UE (user equipment A 130-a, user equipment B 130-b, user equipment C 130-c, ..., user equipment N 130-n) and the data service server (data service server A 120-a, data service server B 120-b, ..., data service server N 120-n). This method of operation is inefficient - it requires costly network communication resources to be held up even when no data traffic is applied and results in high energy consumption at the UE (user equipment A 130-a, user equipment B 130-b, user equipment C 130-c, ..., user equipment N 130-n) due to continues usage of a modem of the UE (user equipment A 130-a, user equipment B 130-b, user equipment C 130-c, ..., user equipment N 130-n).

Current PoC implementations over UMTS type cellular network 110 apply the same "Circuit Switching" method. This allows each participating UE (e.g. user equipment A 130-a, user equipment B 130-b, user equipment C 130-c, ..., user equipment N 130-n) to establish a singular or group calls with very short setup times and guarantee almost instant response time to the user. For example, setup the PoC session and connect to the call in less than one second. Nevertheless, this requires the cellular network 110 resources to be utilized in a dedicated fashion - allocating cellular network 110 resources for each participant UE (e.g. user equipment A 130-a, user equipment B 130-b, user equipment C 130-c, ..., user equipment N 130-n) during the PoC session, even when idle. This method of operation for PoC data services is inefficient - requiring costly cellular network resources to be needlessly allocated and results in high energy consumption at the UE (e.g. user equipment A 130-a, user equipment B 130-b, user equipment C 130-c, ..., user equipment N 130-n), as the modem works constantly in a data transmission mode.

As indicated herein, the presently disclosed subject matter refers to a system and method for short response time data services through cellular network 110 that operate in a manner that will not result in a poor user experience while not requiring a dedicated channel to be continuously allocated to each participating UE (user equipment A 130-a, user equipment B 130-b, user equipment C 130-c, ..., user equipment N 130-n) and not requiring the modem to work constantly in a data transmission mode, thus saving cellular network 110 communication resources and energy on the UE (user equipment A 130-a, user equipment B 130-b, user equipment C 130-c, ..., user equipment N 130-n). This may be achieved by maintaining a transitioning regime in the UE (user equipment A 130-a, user equipment B 130-b, user equipment C 130-c, ..., user equipment N 130-n) that prevents at least one transition of the UE (user equipment A 130-a, user equipment B 130-b, user equipment C 130-c, ..., user equipment N 130-n) to an idle state, as further detailed herein.

In the non-limiting illustrated example in Fig. 1, cellular network 110 may be a UMTS type cellular network 110 or an LTE type cellular network 110. The data service servers (data service server A 120-a, data service server B 120-b, ..., data service server N 120-n) may be PoC servers and UE (user equipment A 130-a, user equipment B 130-b, user equipment C 130-c, ..., user equipment N 130-n) may be smart phones capable of connecting to the cellular network 110 though a modem. In this non-limiting example, user equipment B 130-b and user equipment C 130-c are participating in an active talk group. The modem of user equipment A 130-a is kept in an intermediate state. This means that there is no dedicated communication channel allocated between user equipment A 130-a and cellular network 110. This also means that the energy consumption of user equipment A 130-a is lower than what the energy consumption of user equipment A 130-a would have been if the modem of user equipment A 130-a would have been kept in a dedicated channel state. When user equipment A 130-a wishes to connect to a single call or join a talk group, the modem of user equipment A 130-a transitions to a dedicated channel state and a connection between user equipment A 130-a and data service server A 120-a is established through cellular network 110. It is to be noted that the time-period required to transition the modem of user equipment A 130-a from the intermediate state to the dedicated channel state is shorter than a the time-period that would have been required to transition the modem of user equipment A 130-a from the idle state to the dedicated channel state, if the modem of user equipment A 130-a would have been in idle state prior to establishing the connection. In this non-limiting example, user equipment A 130-a may initiate the PoC session in less than one second as opposed to more than 3 seconds latency when initiating the PoC session when transition from idle state to dedicated channel state.

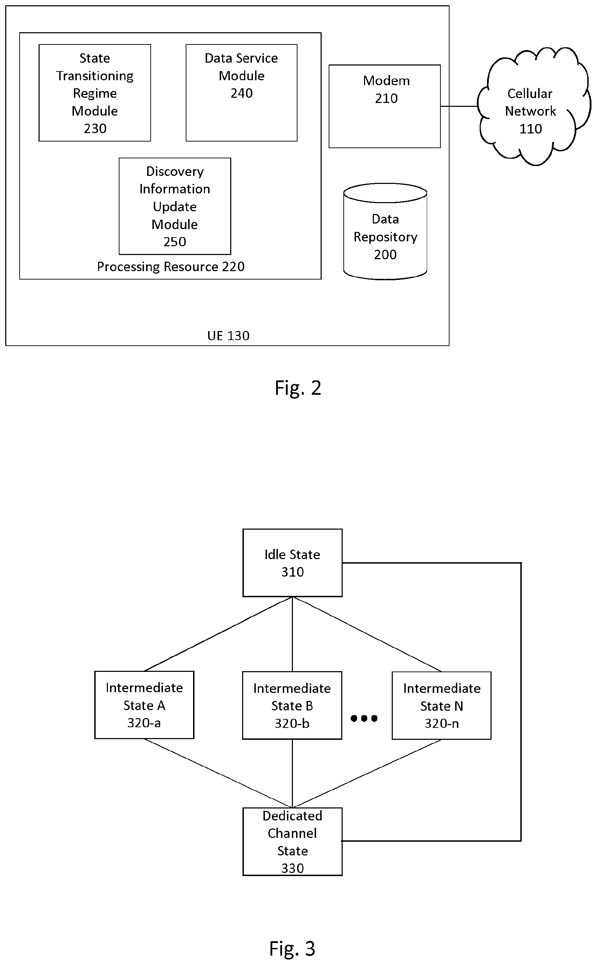

Attention is drawn to **Fig. 2****,** a block diagram schematically illustrating one example of a system for short response time data services through cellular networks, in accordance with the presently disclosed subject matter.

According to certain examples of the presently disclosed subject matter, UE 130 (for example, any one of: user equipment A 130-a, user equipment B 130-b, user equipment C 130-c, ..., user equipment N 130-n) can comprise a modem 210 capable of connecting to one or more cellular networks 110 for transferring data to and from cellular network 110. Cellular network 110 may be a UMTS type cellular network, an LTE type cellular network, an HSPA type cellular network, other types of cellular networks or any combination thereof.

UE 130 can further comprise, or be otherwise associated with, a data repository 200 (e.g. a database, a storage system, a memory including Read Only Memory - ROM, Random Access Memory - RAM, or any other type of memory, etc.) configured to store data, including inter alia one or more identification parameters, for the identification of UE 130 when establishing and participating in a data service, etc. Data repository 200 can be further configured to enable retrieval and/or update and/or deletion of the stored data. It is to be noted that in some cases, data repository 200 can be distributed, while the UE 130 has access to the information stored thereon, e.g. via cellular network 110 to which it connects through the modem 210.

UE 130 further comprises one or more processing resource 220. Processing resource 220 can be one or more processing units (e.g. central processing units), microprocessors, microcontrollers or any other computing devices or modules, including multiple and/or parallel and/or distributed processing units, which are adapted to independently or cooperatively process data for controlling relevant resources of the UE 130 and for enabling operations related to resources of the UE 130.

The processing resource 220 can comprise one or more of the following modules: state transitioning regime module 230, data service module 240, and discovery information update module 250.

According to some examples of the presently disclosed subject matter, state transitioning regime module 230 can be configured to perform a state transitioning regime process, as further detailed herein, inter alia with respect to Fig. 3. The data service module 240 can be configured to perform a data service process, as further detailed herein, inter alia with respect to Fig. 4. The discovery information update module 250 can be configured to perform a discovery information update process, as further detailed herein, inter alia with respect to Fig. 5.

As explained herein, each UE 130 comprises a modem 210, a data repository 200 and a processing resource 220. As mentioned, modem 210 is capable of connecting UE 130 to one or more cellular networks 110, at least one of them is a UMTS type cellular network 110. The modem 210 of the UE 130 may be in one of the following non-limiting states: an idle state, one or more intermediate states, and a dedicated channel state. In the idle state the modem 210 is not connected to the cellular network 110. In the dedicated channel state, the modem 210 is connected to the cellular network 110 via a dedicated communication channel. In each of the intermediate states the modem 210 is not connected to the cellular network 110 via the dedicated communication channel and the time-period required to transition from one of the corresponding intermediate states to the dedicated channel state is shorter than the time-period required to transition from the idle state to the dedicated channel state. The processing resource 220 of the UE 130 is configured to maintain a state transitioning regime of the UE 130, wherein the state transitioning regime includes preventing at least one transition of the UE 130 to an idle state for at least one time-period. A further explanation is provided herein, inter alia with reference to Fig. 3.

It is to be noted that the power consumption of the UE 130 in the intermediate states is lower than the power consumption of the UE 130 in the dedicated channel state.

In a further embodiment, the modem 210 is further capable of connecting the UE 130 to an LTE type cellular network 110. In order for the UE 130 to switch from a UMTS type cellular network 110 to an LTE type cellular network 110 the modem 210 must be in idle state. In this embodiment, the processing resource 220 may be further configured to periodically transitioning the UE 130 to the idle state, for example: from the intermediate state to the idle state, thereby enabling the modem 210 to switch from the UMTS type cellular network 110 to the LTE type cellular network 110 when such a switch is possible.

In a further embodiment, the processing resource 220 is further configured to maintain a state transitioning regime of the UE 130, wherein the state transitioning regime includes periodically transitioning the UE 130 to the dedicated channel state, thereby causing the cellular network 110 to update discovery information associated with the UE 130.

Attention is drawn to **Fig. 3****,** block diagram schematically illustrating one example of the states a UE may be present in, in accordance with the presently disclosed subject matter.

According to certain examples of the presently disclosed subject matter, UE 130 can be configured to control the state transitioning regime of modem 210, e.g. utilizing state transitioning regime module 230, as further detailed herein.

The modem 210 may be in one of the following non-limiting states: an idle state 310, one or more intermediate states (intermediate state A 320-a, intermediate state B 320-b, ..., intermediate state N 320-n), and a dedicated channel state 330.

In the idle state 310, the modem 210 is not connected to the cellular network 110. In the dedicated channel state 330, the modem 210 is connected to the cellular network 110 via a dedicated communication channel. In each of the intermediate states (intermediate state A 320-a, intermediate state B 320-b, ..., intermediate state N 320-n) the modem 210 is not connected to the cellular network 110 via the dedicated communication channel and the time-period required to transition from one of the corresponding intermediate states (intermediate state A 320-a, intermediate state B 320-b, ..., intermediate state N 320-n) to the dedicated channel state 330 is shorter than the time-period required to transition from the idle state 310 directly to the dedicated channel state 330.

The state transitioning regime module 230 may change the state of modem 210 directly from idle state 310 to dedicated channel state 330 (and back). The state transitioning regime module 230 may change the state of modem 210 from idle state 310 to one of the intimidate state (intermediate state A 320-a, intermediate state B 320-b, ..., intermediate state N 320-n) (and back) and from one of the intimidate state (intermediate state A 320-a, intermediate state B 320-b, ..., intermediate state N 320-n) to dedicated channel state 330 (and back).

It is to be noted that the power consumption of the UE 130 while the modem 210 is in one of the intermediate states (intermediate state A 320-a, intermediate state B 320-b, ..., intermediate state N 320-n) is lower than the power consumption of the UE 130 when the modem 210 is in the dedicated channel state 330.

In one embodiment of the disclosed subject matter, the intermediate states (intermediate state A 320-a, intermediate state B 320-b, ..., intermediate state N 320-n) are one or more of: URA_PCH (UTRAN Registration Area Paging Channel) state, CELL_PCH (Cell Paging Channel) state or CELL_FACH (Forward Access Channel) state as defined by the Radio Resource Control (RRC) protocol.

Bearing this in mind, attention is drawn to **Fig. 4****,** a flowchart illustrating one example of a sequence of operations carried out for preventing at least one transition of the UE to an idle state, in accordance with the presently disclosed subject matter.

According to certain examples of the presently disclosed subject matter, UE 130 can be configured to perform a data service process 400, e.g. utilizing data service module 240.

For this purpose, UE 130 can be configured to maintain a state transitioning regime of the UE 130, wherein the state transitioning regime includes preventing at least one transition of the UE 130 to an idle state 310 for at least one time-period, thereby keeping the UE 130 in one of the intermediate state (i.e. intermediate state A 320-a, intermediate state B 320-b, ..., intermediate state N 320-n).

For this purpose, UE 130 can be configured to periodically transmit messages to the cellular network 110 via modem 210, thus preventing the transition of modem 210 to the idle state 310 (block 410). In a non-limiting example, the UE 130 is configured in a way that if UE 130 does not transmit or receive messages from cellular network 110 for a time period equal or larger than a return_to_idle time period, the modem 210 transitions to the idle state 310. In this example, the periodic transmission of the messages may be within a time period between transmissions that is smaller than the return_to_idle time period. A real-world example may be of a return_to_idle time period that is configured to be 60 seconds and of a message transmitted by modem 210 every 25 seconds, thus preventing the transition to idle state 310.

UE 130 may be further configured to periodically transition UE 130 to the idle state 310, thereby enabling modem 210 to switch from a UMTS type cellular network 110 to an LTE type cellular network 110, which has higher communication speeds in comparison to UMTS type cellular network 110, if such LTE network is discoverable thereby (block 420). A non-limiting example may be of the UE 130 periodically transitioning to the idle state 310 every 5 minutes, and remaining in the idle state 310 for a 40 seconds time period.

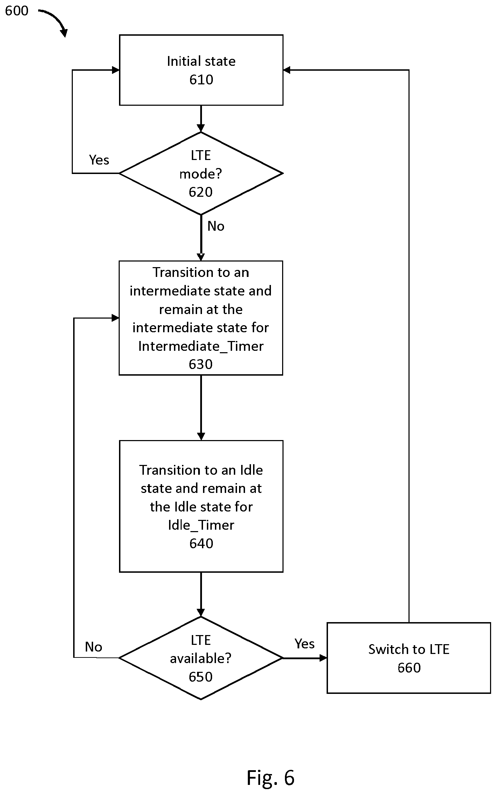

An algorithm example, to be performed by processing resource 220, for controlling the state transitioning regime of the UE 130 may be as further detailed herein, inter alia with respect to Fig. 6.

It is to be noted that, with reference to Fig. 4, some of the blocks can be integrated into a consolidated block or can be broken down to a few blocks and/or other blocks may be added. Furthermore, in some cases, the blocks can be performed in a different order than described herein (for example, block 420 can be performed before block 410, etc.). It is to be further noted that some of the blocks are optional. It should be also noted that whilst the flow diagram is described also with reference to the system elements that realizes them, this is by no means binding, and the blocks can be performed by elements other than those described herein.

Turning to **Fig. 5****,** there is shown a flowchart illustrating one example of a sequence of operations carried out for causing the cellular network to update discovery information associated with the UE, in accordance with the presently disclosed subject matter

In this embodiment, modem 210 has at least an idle state 310 and a dedicated channel state 330, wherein in the idle state 310 the modem 210 is not connected to the cellular network 110, and in the dedicated channel state 330 the modem 210 is connected to the cellular network 110 via a dedicated communication channel.

According to certain examples of the presently disclosed subject matter, UE 130 can be configured to perform a discovery information update process 500, e.g. utilizing discovery information update module 250.

For this purpose, UE 130 can be configured to maintain a state transitioning regime of the UE 130, managing the state of modem 210 (block 510).

UE 130 is further configured to periodically transition UE 130 to the dedicated channel state 330, thereby causing the cellular network 110 to update discovery information associated with the UE 130. This will allow cellular network 110 to have up-to date discovery information for UE 130 and will prevent the need for a long process of discovering the communication path required to reach UE 130. (block 520).

For example, user equipment A 130-a may be participating in a data service provided by data service server A 120-a. In order for data service server A 120-a to provide the data service it maintains discovery information associated with a communication path over cellular network 110 required to reach user equipment A 130-a. The discovery information is updated when user equipment A 130-a is in the dedicated channel state 330. When user equipment A 130-a is not in dedicated channel state 330, the discovery information is not updated and may become irrelevant as the discovery path to user equipment A 130-a may change over time, for example if user equipment A 130-a may be reached through a certain cellular cell of cellular network 110 and due to changes in the location of user equipment A 130-a it is now reached through a different cellular cell of cellular network 110, the information of through which cell to reach user equipment A 130-a should be updated. User equipment A 130-a is configured to periodically transition to the dedicated channel state 330 thereby causing the cellular network 110 to update the discovery information associated with user equipment A 130-a, keeping the discovery information relevant and up-to date.

It is to be noted that, with reference to Fig. 5, some of the blocks can be integrated into a consolidated block or can be broken down to a few blocks and/or other blocks may be added. Furthermore, in some cases, the blocks can be performed in a different order than described herein (for example, block 520 can be performed before block 510, etc.). It is to be further noted that some of the blocks are optional. It should be also noted that whilst the flow diagram is described also with reference to the system elements that realizes them, this is by no means binding, and the blocks can be performed by elements other than those described herein.

Bearing this in mind, attention is drawn to **Fig. 6****,** a flowchart illustrating one example of an algorithm carried out at the UE for preventing at least one transition of the UE to an idle state, in accordance with the presently disclosed subject matter.

For this purpose, processing resource 220 may be configured to be in an initial state mode, in which the modem 210 is in one of the following states: an idle state 310, one or more intermediate states (intermediate state A 320-a, intermediate state B 320-b, .., intermediate state N 320-n), and a dedicated channel state 330 (block 610).

Processing resource 220 can check if modem 210 is in LTE mode, by checking if modem 210 is connected to an LTE type cellular network 110. If modem 210 is connected to an LTE type cellular network 110, the processing resource 220 is configured to return to block 610. Otherwise, the processing resource 220 is configured to advance to block 630 (block 620) and transition modem 210 to an intermediate state (intermediate state A 320-a, intermediate state B 320-b, ..., intermediate state N 320-n). Modem 210 may transition to an intermediate state (if it is not in an intermediate state) and remain in the intermediate state (intermediate state A 320-a, intermediate state B 320-b, .., intermediate state N 320-n) for an Intermediate_Timer time period (e.g. for 1 second, for 2 seconds, etc.). In one embodiment, modem 210 may periodically transmit messages, during the Intermediate_Timer time period, to the UMTS type cellular network 110, for preventing the transition from the intermediate state (intermediate state A 320-a, intermediate state B 320-b, ..., intermediate state N 320-n) (block 630).

After the Intermediate_Timer time period, processing resource 220 may transition modem 210 to an Idle state 310. Modem 210 may remain in Idle state 310 for an Idle_Timer time period (e.g. for 1 second, for 2 seconds, etc.) (block 640). This will enable modem 210 to switch from a UMTS type cellular network 110 to an LTE type cellular network 110, which has higher communication speeds in comparison to UMTS type cellular network 110, if such LTE network is discoverable thereby, as the switch from a UMTS type cellular network 110 to an LTE type cellular network 110may occur only when modem 210 is in idle state 310.

Processing resource 220 may check, utilizing modem 210, if an LTE type cellular network 110 is available to modem 210 for connection. If the LTE type cellular network 110 is available, the processing resource 220 is configured to advance to block 660, otherwise the processing resource 220 is configured to return to block 630 (block 650).

Processing resource 220 utilizes modem 210 to connect to the LTE type cellular network 110 and then return to block 610 (block 660).

It is to be noted that, with reference to Fig. 6, some of the blocks can be integrated into a consolidated block or can be broken down to a few blocks and/or other blocks may be added. Furthermore, in some cases, the blocks can be performed in a different order than described herein. It is to be further noted that some of the blocks are optional. It should be also noted that whilst the flow diagram is described also with reference to the system elements that realizes them, this is by no means binding, and the blocks can be performed by elements other than those described herein.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method. should not be regarded as limiting. As such, those skilled in the art will appreciate that the conception upon which this disclosure is based may readily be utilized as a basis for designing other structures, methods, and systems for carrying out the several purposes of the present presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A User Equipment (UE) (130) comprising:
a modem (210) capable of connecting to a Long-Term Evolution, LTE, cellular network and capable of connecting to a Universal Mobile Telecommunications System UMTS cellular network for transmitting and receiving data, the modem (210), when using the UMTS cellular network, having an idle state, one or more intermediate states, and a dedicated channel state, wherein: (a) in the idle state the modem is not connected to the UMTS cellular network, (b) in the dedicated channel state the modem (210) is connected to the UMTS cellular network via a dedicated communication channel, and (c) in each of the intermediate states the modem (210) is not connected to the UMTS cellular network via the dedicated communication channel and a first time-period required to transition from the corresponding intermediate state to the dedicated channel state is shorter than a second time-period required to transition from the idle state to the dedicated channel state; and
a processing resource (220);
the UE (130) **characterized by** the processing resource being configured to:
maintain a state transitioning regime of the UE (130) when the modem (210) is connected to the UMTS cellular network, wherein the state transitioning regime includes (a) preventing at least one transition of the UE to an idle state for at least one time-period, and (b) periodically transitioning the UE (130) to the idle state, and enabling the modem (210) to switch from the UMTS cellular network to the LTE cellular network.

2. The UE (130) of claim 1, wherein the state transitioning regime further includes periodically transitioning the UE (130) to the dedicated channel state, and causing the cellular network to update discovery information associated with the UE (130).

3. The UE (130) of claim 1, wherein a first power consumption of the UE (130) in the idle state is lower than a second power consumption of the UE (130) in the intermediate states, and wherein the second power consumption of the UE (130) in the intermediate states is lower than a third power consumption of the UE (130) in the dedicated channel state.

4. The UE (130) of claim 1, wherein the processing resource (220) is configured to periodically transmit messages to the UMTS cellular network for the prevention of the at least one transition of the UE to the idle state.

5. The UE (130) of claim 1, wherein the processing resource (220) is further configured to transmit and receive data utilizing the modem (210) in order to facilitate a data service.

6. The UE (130) of claim 5, wherein the data service is a Push-To-Talk,PTT, over the UMTS cellular network or over the LTE cellular network.

7. The UE (130) of claim 1, wherein the UE is a mobile phone device.

8. A method comprising:
connecting a User Equipment (UE) (130), comprising a modem (210), to a Universal Mobile Telecommunications System, UMTS, cellular network for transmitting and receiving data, wherein the modem (210) is capable of connecting the UE (130) to a Long-Term Evolution, LTE, cellular network and capable of connecting the UE (130) to the UMTS cellular network; wherein when the modem (210) is using the UMTS cellular network the modem (210) having an idle state, one or more intermediate states, and a dedicated channel state, wherein: (a) in the idle state the modem is not connected to the UMTS cellular network, (b) in the dedicated channel state the modem (210) is connected to the UMTS cellular network via a dedicated communication channel, and (c) in each of the intermediate states the modem (210) is not connected to the UMTS cellular network via the dedicated communication channel and a first time-period required to transition from the corresponding intermediate state to the dedicated channel state is shorter than a second time-period required to transition from the idle state to the dedicated channel state;
the method **characterized by** maintaining, by a processing resource (220) of the UE (130), a state transitioning regime of the UE (130) when the modem (210) is connected to the UMTS cellular network, wherein the state transitioning regime includes (a) preventing at least one transition of the UE (130) to an idle state for at least one time-period, and (b) periodically transitioning the UE (130) to the idle state, and enabling the modem (210) to switch from the UMTS cellular network to the LTE cellular network.

9. The method of claim 8, wherein the state transitioning regime further includes periodically transitioning the UE (130) to the dedicated channel state, and causing the cellular network to update discovery information associated with the UE (130).

10. The method of claim 8, wherein a first power consumption of the UE (130) in the idle state is lower than a second power consumption of the UE (130) in the intermediate states, and wherein the second power consumption of the UE (130) in the intermediate states is lower than a third power consumption of the UE (130) in the dedicated channel state.

11. The method of claim 8, further comprising periodically transmitting, by the processing resource (220), messages to the UMTS cellular network for the prevention of the at least one transition of the UE to the idle state.

12. The method of claim 8, further comprising transmitting and receiving, by the processing resource (220), data utilizing the modem (210) in order to facilitate a data service.

13. The method of claim 12, wherein the data service is a Push-To-Talk,PTT, over the UMTS cellular network or over the LTE cellular network.

14. The method of claim 8, wherein the UE (130) is a mobile phone device.

15. A non-transitory computer readable storage medium having computer readable program code embodied therewith, the computer readable program code, executable by at least one processor of a User Equipment (UE) (130) comprising a modem (210) to perform a method comprising:
connecting the UE (130) to a Universal Mobile Telecommunications System, UMTS, cellular network for transmitting and receiving data, wherein the modem (210) is capable of connecting the UE (130) to a Long-Term Evolution, LTE, cellular network and capable of connecting the UE (130) to the UMTS cellular network; wherein when the modem (210) is using the UMTS cellular network the modem having an idle state, one or more intermediate states, and a dedicated channel state, wherein: (a) in the idle state the modem is not connected to the UMTS cellular network, (b) in the dedicated channel state the modem (210) is connected to the UMTS cellular network via a dedicated communication channel, and (c) in each of the intermediate states the modem (210) is not connected to the UMTS cellular network via the dedicated communication channel and a first time-period required to transition from the corresponding intermediate state to the dedicated channel state is shorter than a second time-period required to transition from the idle state to the dedicated channel state; and
the method **characterized by** maintaining a state transitioning regime of the UE (130) when the modem (210) is connected to the UMTS cellular network, wherein the state transitioning regime includes (a) preventing at least one transition of the UE (130) to an idle state for at least one time-period, and (b) periodically transitioning the UE (130) to the idle state, and enabling the modem (210) to switch from the UMTS cellular network to the LTE cellular network.

## Patentansprüche

1. Benutzergerät (UE) (130), welches aufweist:
ein Modem (210), das in der Lage ist, eine Verbindung zu einem Long-Term Evolution-Mobilfunknetz (LTE) herzustellen und eine Verbindung zu einem Universal-Mobile-Telecommunications-System-Mobilfunknetz (UMTS) zum Senden und Empfangen von Daten herzustellen, wobei das Modem (210), bei Verwendung des UMTS-Mobilfunknetzes einen Ruhezustand, einen oder mehrere Zwischenzustände und einen dedizierten Kanalzustand aufweist, wobei: (a) das Modem (210) im Ruhezustand nicht mit dem UMTS-Mobilfunknetz verbunden ist, (b) das Modem (210) im dedizierten Kanalzustand mit dem UMTS-Mobilfunknetz über einen dedizierten Kommunikationskanal verbunden ist, und (c) das Modem (210) in jedem der Zwischenzustände nicht über den dedizierten Kommunikationskanal mit dem UMTS-Mobilfunknetz verbunden ist und ein erster Zeitraum, der für den Übergang von dem entsprechenden Zwischenzustand in den dedizierten Kanalzustand erforderlich ist, kürzer ist als ein zweiter Zeitraum, der für den Übergang von dem Ruhezustand in den dedizierten Kanalzustand erforderlich ist; und
eine Verarbeitungsressource (220);
wobei das UE (130) **dadurch gekennzeichnet ist, dass** die Verarbeitungsressource dazu ausgebildet ist, um:
ein Zustandsübergangsregime des UE (130) beizubehalten, wenn das Modem (210) mit dem UMTS-Mobilfunknetz verbunden ist, wobei das Zustandsübergangsregime aufweist: (a) das Verhindern mindestens eines Übergangs des UE (130) in einen Ruhezustand für mindestens einen Zeitraum und (b) das periodische Umschalten des UE (130) in den Ruhezustand, und das Ermöglichen des Wechselns des Modems (210) von dem UMTS-Mobilfunknetz zu dem LTE-Mobilfunknetz.

2. UE (130) nach Anspruch 1, bei welchem das Zustandsübergangsregime ferner das periodische Übergehen des UE (130) in den dedizierten Kanalzustand und das Veranlassen des Mobilfunknetzes zur Aktualisierung von dem UE (130) zugeordneten Erkennungsinformationen aufweist.

3. UE (130) nach Anspruch 1, bei welchem ein erster Stromverbrauch des UE (130) im Ruhezustand geringer ist als ein zweiter Stromverbrauch des UE (130) in den Zwischenzuständen, und bei welchem der zweite Stromverbrauch des UE (130) in den Zwischenzuständen geringer ist als ein dritter Stromverbrauch des UE (130) im dedizierten Kanalzustand.

4. UE (130) nach Anspruch 1, bei welchem die Verarbeitungsressource (220) dazu ausgebildet ist, zum Verhindern des mindestens einen Übergangs des UE in den Ruhezustand periodisch Nachrichten an das UMTS-Mobilfunknetz zu senden.

5. UE (130) nach einem vorhergehenden Anspruch 1, bei welchem die Verarbeitungsressource (220) ferner dazu ausgebildet ist, Daten unter Verwendung des Modems (210) zu senden und zu empfangen, um einen Datendienst zu erleichtern.

6. UE (130) nach Anspruch 5, bei welchem der Datendienst ein Push-To-Talk (PTT) über das UMTS-Mobilfunknetz oder über das LTE-Mobilfunknetz ist.

7. UE (130) nach Anspruch 1, bei welchem das UE ein Mobiltelefongerät ist.

8. Verfahren mit den folgenden Schritten:
Verbinden eines Benutzergeräts (UE) (130), welches ein Modem (210) aufweist, mit einem Universal-Mobile-Telecommunications-System-Mobilfunknetz (UMTS) zum Senden und Empfangen von Daten, wobei das Modem (210) in der Lage ist, eine Verbindung des UE (130) zu einem Long-Term Evolution-Mobilfunknetz (LTE) herzustellen und eine Verbindung des UE (130) zu einem Universal-Mobile-Telecommunications-System-Mobilfunknetz (UMTS) herzustellen; wobei das Modem (210) bei Verwendung des UMTS-Mobilfunknetzes einen Ruhezustand, einen oder mehrere Zwischenzustände und einen dedizierten Kanalzustand aufweist, wobei: (a) das Modem (210) im Ruhezustand nicht mit dem UMTS-Mobilfunknetz verbunden ist, (b) das Modem (210) im dedizierten Kanalzustand mit dem UMTS-Mobilfunknetz über einen dedizierten Kommunikationskanal verbunden ist, und (c) das Modem (210) in jedem der Zwischenzustände nicht über den dedizierten Kommunikationskanal mit dem UMTS-Mobilfunknetz verbunden ist und ein erster Zeitraum, die für den Übergang von dem entsprechenden Zwischenzustand in den dedizierten Kanalzustand erforderlich ist, kürzer ist als ein zweiter Zeitraum, die für den Übergang von dem Ruhezustand in den dedizierten Kanalzustand erforderlich ist; und
wobei das Verfahren **gekennzeichnet ist, durch**
das Beibehalten eines Zustandsübergangsregimes des UE (130) **durch** eine Verarbeitungsressource (220), wenn das Modem (210) mit dem UMTS-Mobilfunknetz verbunden ist, wobei das Zustandsübergangsregime aufweist: (a) das Verhindern mindestens eines Übergangs des UE (130) in einen Ruhezustand für mindestens einen Zeitraum und (b) das periodische Umschalten des UE (130) in den Ruhezustand, und das Ermöglichen des Wechselns des Modems (210) von dem UMTS-Mobilfunknetz zu dem LTE-Mobilfunknetz.

9. Verfahren nach Anspruch 8, bei welchem das Zustandsübergangsregime ferner das periodische Übergehen des UE (130) in den dedizierten Kanalzustand und das Veranlassen des Mobilfunknetzes zur Aktualisierung von dem UE (130) zugeordneten Erkennungsinformationen aufweist.

10. Verfahren nach Anspruch 8, bei welchem ein erster Stromverbrauch des UE (130) im Ruhezustand geringer ist als ein zweiter Stromverbrauch des UE (130) in den Zwischenzuständen, und bei welchem der zweite Stromverbrauch des UE (130) in den Zwischenzuständen geringer ist als ein dritter Stromverbrauch des UE (130) im dedizierten Kanalzustand.

11. Verfahren nach Anspruch 8, ferner mit dem periodischen Senden von Nachrichten an das UMTS-Mobilfunknetz durch die Verarbeitungsressource (220), um den mindestens einen Übergang des UE in den Ruhezustand verhindern.

12. Verfahren nach Anspruch 8, ferner mit dem Schritt des Sendens und Empfangens von Daten durch die Verarbeitungsressource (220) unter Verwendung des Modems (210), um einen Datendienst zu erleichtern.

13. Verfahren nach Anspruch 12, bei welchem der Datendienst ein Push-To-Talk (PTT) über das UMTS-Mobilfunknetz oder über das LTE-Mobilfunknetz ist.

14. Verfahren nach Anspruch 8, bei welchem das UE (130) ein Mobiltelefongerät ist.

15. Nicht-flüchtiges computerlesbares Speichermedium mit einem darin ausgebildeten computerlesbaren Programmcode, wobei der computerlesbare Programmcode von mindestens einem Prozessor eines Benutzergeräts (UE) (130) ausführbar ist, welches ein Modem (210) umfasst, um ein Verfahren durchzuführen, welches die folgenden Schritte aufweist:
Verbinden des UE (130) mit einem Universal-Mobile-Telecommunications-System-Mobilfunknetz (UMTS) zum Senden und Empfangen von Daten, wobei das Modem (210) in der Lage ist, eine Verbindung des UE (130) zu einem Long-Term Evolution-Mobilfunknetz (LTE) herzustellen und eine Verbindung des UE (130) zu einem Universal-Mobile-Telecommunications-System-Mobilfunknetz (UMTS) herzustellen; wobei das Modem (210) bei Verwendung des UMTS-Mobilfunknetzes einen Ruhezustand, einen oder mehrere Zwischenzustände und einen dedizierten Kanalzustand aufweist, wobei: (a) das Modem (210) im Ruhezustand nicht mit dem UMTS-Mobilfunknetz verbunden ist, (b) das Modem (210) im dedizierten Kanalzustand mit dem UMTS-Mobilfunknetz über einen dedizierten Kommunikationskanal verbunden ist, und (c) das Modem (210) in jedem der Zwischenzustände nicht über den dedizierten Kommunikationskanal mit dem UMTS-Mobilfunknetz verbunden ist und ein erster Zeitraum, die für den Übergang von dem entsprechenden Zwischenzustand in den dedizierten Kanalzustand erforderlich ist, kürzer ist als ein zweiter Zeitraum, die für den Übergang von dem Ruhezustand in den dedizierten Kanalzustand erforderlich ist; und
wobei das Verfahren **gekennzeichnet ist, durch**
das Beibehalten eines Zustandsübergangsregimes des UE (130) **durch** eine Verarbeitungsressource (220), wenn das Modem (210) mit dem UMTS-Mobilfunknetz verbunden ist, wobei das Zustandsübergangsregime aufweist: (a) das Verhindern mindestens eines Übergangs des UE (130) in einen Ruhezustand für mindestens einen Zeitraum und (b) das periodische Umschalten des UE (130) in den Ruhezustand, und das Ermöglichen des Wechselns des Modems (210) von dem UMTS-Mobilfunknetz zu dem LTE-Mobilfunknetz.

## Revendications

1. Equipement utilisateur (UE, User Equipment) (130) comprenant :
un modem (210) en mesure de se connecter à un réseau cellulaire de technologie de l'évolution à long terme (LTE, Long-Term Evolution) et en mesure de se connecter à un réseau cellulaire de système universel de télécommunication mobile (UMTS, Universal Mobile Telecommunications System) afin de transmettre et de recevoir des données, le modem (210), lorsqu'il utilise le réseau cellulaire UMTS, ayant un état de repos, un ou plusieurs états intermédiaires, et un état de canal dédié, où : (a) dans l'état de repos, le modem n'est pas connecté au réseau cellulaire UMTS, (b) dans l'état de canal dédié, le modem (210) est connecté au réseau cellulaire UMTS via un canal de communication dédié, et (c) dans chacun des états intermédiaires, le modem (210) n'est pas connecté au réseau cellulaire UMTS via le canal de communication dédié et une première période requise pour une transition de l'état intermédiaire correspondant à l'état de canal dédié est plus courte qu'une deuxième période requise pour une transition de l'état de repos à l'état de canal dédié ; et
une ressource de traitement (220) ;
l'UE (130) étant **caractérisé par** la ressource de traitement qui est configurée pour :
maintenir un régime de transition d'état de l'UE (130) lorsque le modem (210) est connecté au réseau cellulaire UMTS, où le régime de transition d'état inclut (a) le fait d'empêcher au moins une transition de l'UE vers un état de repos pendant au moins une période, et (b) le fait de faire passer de manière périodique l'UE (130) à l'état de repos, et de permettre au modem (210) de basculer du réseau cellulaire UMTS vers le réseau cellulaire LTE.

2. UE (130) selon la revendication 1, dans lequel le régime de transition d'état inclut en outre le fait de faire passer de manière périodique l'UE (130) à l'état de canal dédié, et le fait d'amener le réseau cellulaire à mettre à jour des informations de découverte associées à l'UE (130).

3. UE (130) selon la revendication 1, dans lequel une première consommation d'énergie de l'UE (130) dans l'état de repos est inférieure à une deuxième consommation d'énergie de l'UE (130) dans les états intermédiaires, et où la deuxième consommation d'énergie de l'UE (130) dans les états intermédiaires est inférieure à une troisième consommation d'énergie de l'UE (130) dans l'état de canal dédié.

4. UE (130) selon la revendication 1, dans lequel la ressource de traitement (220) est configurée pour transmettre de manière périodique des messages au réseau cellulaire UMTS pour l'empêchement de la au moins une transition de l'UE vers l'état de repos.

5. UE (130) selon la revendication 1, dans lequel la ressource de traitement (220) est en outre configurée pour transmettre et recevoir des données en utilisant le modem (210) de sorte à faciliter un service de données.

6. UE (130) selon la revendication 5, dans lequel le service de données est un Push-To-Talk, PTT (appuyer pour parler) sur le réseau cellulaire UMTS ou sur le réseau cellulaire LTE.

7. UE (130) selon la revendication 1, où l'UE est un dispositif de téléphone mobile.

8. Procédé comprenant :
le fait de connecter l'équipement utilisateur (UE) (130), comprenant un modem (210), à un réseau cellulaire de système universel de télécommunication mobile (UMTS) afin de transmettre et de recevoir des données, où le modem (210) est en mesure de connecter l'UE (130) à un réseau cellulaire de technologie de l'évolution à long terme (LTE) et en mesure de connecter l'UE (130) au réseau cellulaire UMTS ; où, lorsque le modem (210) utilise le réseau cellulaire UMTS, le modem (210) a un état de repos, un ou plusieurs états intermédiaires, et un état de canal dédié, où : (a) dans l'état de repos, le modem n'est pas connecté au réseau cellulaire UMTS, (b) dans l'état de canal dédié, le modem (210) est connecté au réseau cellulaire UMTS via un canal de communication dédié, et (c) dans chacun des états intermédiaires, le modem (210) n'est pas connecté au réseau cellulaire UMTS via le canal de communication dédié et une première période requise pour une transition de l'état intermédiaire correspondant à l'état de canal dédié est plus courte qu'une deuxième période requise pour une transition de l'état de repos à l'état de canal dédié ;
le procédé étant **caractérisé par** le fait de maintenir, au moyen d'une ressource de traitement (220) de l'UE (130), un régime de transition d'état de l'UE (130) lorsque le modem (210) est connecté au réseau cellulaire UMTS, où le régime de transition d'état inclut (a) le fait d'empêcher au moins une transition de l'UE (130) vers un état de repos pendant au moins une période, et (b) le fait de faire passer de manière périodique l'UE (130) à l'état de repos, et de permettre au modem (210) de basculer du réseau cellulaire UMTS vers le réseau cellulaire LTE.

9. Procédé selon la revendication 8, dans lequel le régime de transition d'état inclut en outre le fait de faire passer de manière périodique l'UE (130) à l'état de canal dédié, et le fait d'amener le réseau cellulaire à mettre à jour des informations de découverte associées à l'UE (130).

10. Procédé selon la revendication 8, dans lequel une première consommation d'énergie de l'UE (130) dans l'état de repos est inférieure à une deuxième consommation d'énergie de l'UE (130) dans les états intermédiaires, et où la deuxième consommation d'énergie de l'UE (130) dans les états intermédiaires est inférieure à une troisième consommation d'énergie de l'UE (130) dans l'état de canal dédié.

11. Procédé selon la revendication 8, comprenant en outre le fait de transmettre de manière périodique, au moyen de la ressource de traitement (220), des messages au réseau cellulaire UMTS pour l'empêchement de la au moins une transition de l'UE vers l'état de repos.

12. Procédé selon la revendication 8, comprenant en outre le fait de transmettre et de recevoir, au moyen de la ressource de traitement (220), des données en utilisant le modem (210) de sorte à faciliter un service de données.

13. Procédé selon la revendication 12, dans lequel le service de données est un Push-To-Talk, PTT (appuyer pour parler) sur le réseau cellulaire UMTS ou sur le réseau cellulaire LTE.

14. Procédé selon la revendication 8, dans lequel l'UE (130) est un dispositif de téléphone mobile.

15. Support de mémorisation lisible par calculateur non transitoire ayant un code de programme lisible par calculateur intégré sur celui-ci, le code de programme lisible par calculateur, étant exécutable par au moins un processeur de l'équipement utilisateur (UE) (130) comprenant un modem (210) pour mettre en œuvre un procédé comprenant :
le fait de connecter l'UE (130) à un réseau cellulaire de système universel de télécommunication mobile (UMTS) afin de transmettre et de recevoir des données, où le modem (210) est en mesure de connecter l'UE (130) à un réseau cellulaire de technologie de l'évolution à long terme (LTE) et en mesure de connecter l'UE (130) au réseau cellulaire UMTS ; où, lorsque le modem (210) utilise le réseau cellulaire UMTS, le modem a un état de repos, un ou plusieurs états intermédiaires, et un état de canal dédié, où : (a) dans l'état de repos, le modem n'est pas connecté au réseau cellulaire UMTS, (b) dans l'état de canal dédié, le modem (210) est connecté au réseau cellulaire UMTS via un canal de communication dédié, et (c) dans chacun des états intermédiaires, le modem (210) n'est pas connecté au réseau cellulaire UMTS via le canal de communication dédié et une première période requise pour une transition de l'état intermédiaire correspondant à l'état de canal dédié est plus courte qu'une deuxième période requise pour une transition de l'état de repos à l'état de canal dédié ; et
le procédé étant **caractérisé par** le fait de maintenir un régime de transition d'état de l'UE (130) lorsque le modem (210) est connecté au réseau cellulaire UMTS, où le régime de transition d'état inclut (a) le fait d'empêcher au moins une transition de l'UE (130) vers un état de repos pendant au moins une période, et (b) le fait de faire passer de manière périodique l'UE (130) à l'état de repos, et de permettre au modem (210) de basculer du réseau cellulaire UMTS vers le réseau cellulaire LTE.
